# EUROPÄISCHE PATENTSCHRIFT

(11) **EP 3 609 816 B1**
(45) Veröffentlichungstag und Bekanntmachung des Hinweises auf die Patenterteilung: **19.05.2021**
(21) Anmeldenummer: 19710582.8
(22) Anmeldetag: 05.03.2019
(51) Int. Cl.: B65G 1/04

(54) **REGALLAGER ZUM LAGERN VON ARTIKELN IN LAGERPLÄTZEN VON REGALEN**
HIGH-BAY WAREHOUSE FOR STORING ITEMS IN STORAGE LOCATIONS OF BAYS
ENTREPÔT À RAYONNAGES SERVANT À ENTREPOSER DES ARTICLES DANS DES EMPLACEMENTS D'ENTREPOSAGE DE RAYONNAGES

(30) Priorität: 12.03.2018 AT 502122018
(43) Veröffentlichungstag der Anmeldung: 19.02.2020
(73) Patentinhaber: Knapp AG, 8075 Hart bei Graz (AT)
(72) Erfinder: MATHI, Franz, 8075 Hart bei Graz (AT); PUNTIGAM, Wolfgang, 8075 Hart bei Graz (AT); LERCHE, Robert, 8075 Hart bei Graz (AT); HUTTER, Johannes Alois, 8075 Hart bei Graz (AT); GINDL, Alfred, 8075 Hart bei Graz (AT); RESCH, Alexander, 8075 Hart bei Graz (AT)
(74) Vertreter: Röggla, Harald
(86) Internationale Anmeldenummer: PCT/AT2019/060071
(87) Internationale Veröffentlichungsnummer: WO 2019/173854

(56) Entgegenhaltungen:
- WO-A1-2014/204300
- AT-B1- 518 556
- US-A1- 2016 075 512

## Beschreibung

Die Erfindung betrifft ein Regallager zum Lagern von Artikeln in Lagerplätzen von Regalen gemäß den Merkmalen des Oberbegriffs des Anspruchs 1.

Das Patent AT 516404 B1 offenbart ein Regallager, welches Regale mit Lagerplätzen zum Lagern von Artikeln aufweist, wobei zwischen den Regalen Regalgassen verlaufen. Am Regallager sind Führungsbahnen ausgebildet, wobei erste Führungsbahnen in Richtung der Regale und zweite Führungsbahnen quer zu den Regalen vorgesehen sind, wobei die Führungsbahnen in zumindest einem Kreuzungsbereich zusammenlaufen oder sich in diesem kreuzen. Die Führungsbahnen dienen als Verfahrwege für Bahnfahrzeuge, die eine Antriebseinheit und eine Fahrzeugsteuerung aufweisen und gesteuert durch die Fahrzeugsteuerung und angetrieben durch die Antriebseinheit Artikel gemäß zumindest einem Auftrag in die Lagerplätze Ein- oder aus diesen Auslagern. Die Kreuzungsbereiche dienen dabei als Umsetzbereiche für die Bahnfahrzeuge zwischen verschiedenen Führungsbahnen. Durch die Anordnung der Führungsbahnen können die Bahnfahrzeuge beliebig im Regallager verfahren und jeden an eine Führungsbahn angeschlossenen Lagerplatz erreichen.

Bei solchen Regallagern werden die Bahnfahrzeuge im Allgemeinen über in den Bahnfahrzeugen ausgebildete Stromspeichereinheiten mit Energie versorgt, wobei die Bahnfahrzeuge die Stromspeichereinheiten an Aufladepunkten aufladen können. Aufladepunkte sind beispielsweise an Artikelübergabestationen ausgebildet, da sich die Bahnfahrzeuge dort wiederkehrend über einen längeren Zeitraum aufhalten. Die Bahnfahrzeuge bekommen ihre Aufträge zum Ein- und Auslagern von Artikeln über Kommunikationsschnittstellen beispielsweise WLAN von einer Systemsteuerung übermittelt.

Aufgrund von Wartungs-, Reparatur- und Instandhaltungsarbeiten im Regallager ist es notwendig, Begehungen des Regallagers durch Personen zu ermöglichen. Um den Betrieb des Regallagers nicht gänzlich einstellen zu müssen, werden hierzu nur die Bereiche des Regallagers sicherheitsgerichtet abgeschaltet, die von der Person begangen werden. Dazu meldet die Person eine Begehung für einen Bereich des Regallagers bei der Systemsteuerung an, wobei die Systemsteuerung diesen Bereich dann abschaltet und den in dem Bereich befindlichen Bahnfahrzeugen über die Kommunikationsschnittstellen einen Befehl, den betroffenen Bereich zu verlassen bzw. den Befehl zum sicherheitsrelevanten Abschalten übermittelt. Andere Bahnfahrzeuge, die sich gerade außerhalb des Bereichs befinden, erhalten den Befehl, nicht in den Bereich einzufahren und Aufträge, die eine Befahrung des Bereichs nötig machen, aufzuschieben oder umzurouten.

Es hat sich aber im Betrieb so eines Regallagers als nachteilig erwiesen, dass die Übermittelung von Befehlen an die Bahnfahrzeuge aufgrund der Menge an in dem Regallager verbauten Metall und einer Weitläufigkeit des Regallagers fehlschlagen kann oder erst zu einem späteren Zeitpunkt erfolgt. Hierdurch kann es insbesondere bei sicherheitsrelevanten Abschaltungen dazu kommen, dass sich Bahnfahrzeuge trotzdem auch in dem Bereich, der eigentlich abgeschaltet ist, weiterbewegen und somit ein hohes Sicherheitsrisiko für die Person darstellen.

Aus den Patenten AT 516231 B1, AT 518556 B1 und AT 513977 B1 ist jeweils ein Regallager mit Regalen bekannt, welches zwischen den Regalen verlaufende Regalgassen aufweist, in denen einzelne von jeweils einem Bahnfahrzeug befahrbare Bahnen ausgebildet sind. Die Bahnfahrzeuge erhalten über in den Bahnen ausgebildete Stromschienen Befehle und können über diese mit Energie versorgt werden, wobei über die Stromschienen eine sichere Übermittlung von Befehlen stattfinden kann.

Bei den aus AT 516231 B1, AT 518556 B1 und AT 513977 B1 bekannten Regallagern hat sich als nachteilig erwiesen, dass zur sicheren Übermittlung von Befehlen zwingend überall in den von den Bahnfahrzeugen befahrbaren Bahnen Stromschienen ausgebildet sein müssen, was im Hinblick auf in den Patenten AT 516231 B1, AT 518556 B1 und AT 513977 B1 nicht offenbarten Kreuzungsbereichen von Bahnen problematisch wäre WO 2014/204300 A1 offenbart weiterhin ein Regallager gemäß dem Oberbegriff des Anspruchs 1.

Es ist die Aufgabe der vorliegenden Erfindung, ein Regallager bereitzustellen, welches die oben angeführten Nachteile des Standes der Technik überwindet und jederzeit sicher abgeschaltet werden kann.

Erfindungsgemäß wird die vorliegende Erfindung durch ein Regallager mit den Merkmalen des kennzeichnenden Teils des Anspruchs 1 gelöst. Bevorzugte Ausgestaltungen der Erfindung sind Gegenstand der abhängigen Ansprüche.

Das erfindungsgemäße Regallager weist zumindest eine Regalgasse zwischen zumindest zwei Regalen auf. Vorteilhaft weist das Regallager eine Vielzahl von Regalen und zwischen den Regalen verlaufende Regalgassen auf. Ein Regal besteht vorteilhaft aus mehreren Ebenen mit einer Vielzahl an Lagerplätzen für Artikel pro Ebene. Die Ebenen sind vorteilhaft bei Betrieb des Regallagers horizontal angeordnet.

In jeder Regalgasse verläuft zumindest eine Führungsbahn, die über zumindest einen Kreuzungsbereich an zumindest eine andere Führungsbahn angebunden ist, welche wiederum auch zumindest teilweise in einer Regalgasse und/oder außerhalb einer Regalgasse verläuft. Auch besteht die Möglichkeit, dass zumindest eine Führungsbahn zumindest teilweise beabstandet zu den Regalen verläuft. Die Führungsbahnen dienen für zumindest ein Bahnfahrzeug als Verfahrweg.

Die Führungsbahnen sind vorteilhaft durch zwei als Fahrschienen ausgebildete Träger gebildet, die beabstandet zueinander angeordnet sind und als Abrollflächen für die Räder der Bahnfahrzeuge dienen. Die Fahrschienen können im Wesentlichen glatt sein, können aber auch beispielsweise durch Zahnstangen gebildet sein, wobei die Räder entsprechend durch Zahnräder gebildet sein können. Vorteilhaft werden die Fahrschienen so ausgebildet, dass sie auch die Funktion der seitlichen Führung entlang der Führungsbahn übernehmen können.

Der zumindest eine Kreuzungsbereich dient dem zumindest einen Bahnfahrzeug zum Wechseln von einer Führungsbahn auf eine andere Führungsbahn, wobei in einem Kreuzungsbereich je nach Ausführung des Regallagers zumindest zwei Führungsbahnen zusammenlaufen. Vorteilhaft weist das Regallager eine Vielzahl an Bahnfahrzeugen auf.

Je nach Ausbildung des Regallagers und des Kreuzungsbereichs besteht die Möglichkeit, dass die Bahnfahrzeuge im Kreuzungsbereich in einer insbesondere im Betrieb des Regallagers horizontal angeordneten Ebene von einer Führungsbahn auf eine andere Führungsbahn umwechseln. In weiterer Folge wird so ein Kreuzungsbereich als horizontaler Kreuzungsbereich bezeichnet. Weiters besteht die Möglichkeit, dass die Bahnfahrzeuge im Kreuzungsbereich von einer Führungsbahn einer insbesondere im Betriebs des Regallagers horizontal angeordneten Ebene auf eine Führungsbahn wechseln, die zu dieser Ebene geneigt angeordnet ist oder von einer besagten geneigten Führungsbahn auf eine Führungsbahn in einer Ebene wechseln. In weiterer Folge wird so ein Kreuzungsbereich als vertikaler Kreuzungsbereich bezeichnet. Die Führungsbahnen können also beispielsweise in einem Winkel von 30°, 45° oder 90° zueinander geneigt, also schräg oder senkrecht bergauf oder bergab, angeordnet sein. Weiters besteht die Möglichkeit, dass die geneigte Führungsbahn nicht gerade ist und geschwungen ausgebildet ist, um einen Übergang zwischen den Führungsbahnen zu glätten.

Zweckmäßig laufen in einem Kreuzungsbereich nicht mehr als sechs Führungsbahnen zusammen.

Die Führungsbahnen laufen in dem horizontalen Kreuzungsbereich bevorzugt in einem Winkel von 90° zueinander zusammen. Zweckmäßig ist dabei das zumindest eine Bahnfahrzeug im Wesentlichen rechteckig ausgebildet, wobei an ersten einander gegenüberliegenden Seitenbereichen der Bahnfahrzeuge erste Räder angeordnet sind, die zum Fahren in eine erste Richtung ausgebildet sind und wobei an zweiten einander gegenüberliegenden Seitenbereichen der Bahnfahrzeuge zweite im Betrieb des Regallagers vertikal aus- und einfahrbare Räder angeordnet sind, die zum Fahren in eine um 90° zur ersten Richtung versetzte zweite Richtung ausgebildet sind. In einer alternativen Ausführungsvariante besteht aber auch die Möglichkeit, dass die Bahnfahrzeuge nur vier Räder aufweisen, die vorzugsweise schwenkbar an den Ecken des Bahnfahrzeugs ausgebildet sind. Das hat den Vorteil, dass ein Bahnfahrzeug selbständig und ohne weitere Zusatzelemente, wie Drehscheiben, etc., in dem zumindest einen horizontalen Kreuzungsbereich von einer Führungsbahn auf eine andere vorzugsweise quer führende Führungsbahn, beispielsweise durch Drehung um die eigene Achse, wechseln kann.

Mit Hilfe von vertikalen Kreuzungsbereichen können die Bahnfahrzeuge bei einem Regallager mit mehreren Ebenen zwischen den Ebenen umgesetzt werden. Dazu ist vorteilhaft zwischen den Führungsbahnen eine aktive Weiche ausgebildet sein. Insbesondere bei steilen Führungsbahnen ist es vorteilhaft, für die hinteren und vorderen Räder separate Fahrschienen zu realisieren, um mit den Bahnfahrzeugen transportierte Artikel bzw. das Bahnfahrzeug selbst stets in einer waagerechten Position zu halten. Um ein Durchrutschen der Räder der Bahnfahrzeuge bei insbesondere steil geneigten Führungsbahnen zu verhindern, sind die Führungsbahnen vorteilhaft mit Zahnstangen ausgebildet und die Bahnfahrzeuge weisen entsprechende Zahnräder auf, die in die Zahnstange eingreifen.

Das zumindest eine Bahnfahrzeug weist zumindest eine Fahrzeugsteuerung und zumindest eine Antriebseinheit auf. Die zumindest eine Fahrzeugsteuerung steuert gemäß zumindest eines Auftrags ein Ein- und Auslagern der Artikel im Regallager. Die zumindest eine Antriebseinheit dient zum Antrieb des Bahnfahrzeugs. Die Fahrzeugsteuerung umfasst vorzugsweise alle zum Betrieb des Bahnfahrzeuges notwendigen Steuereinheiten, insbesondere weist die Fahrzeugsteuerung eine teilweise integrierte Sicherheitssteuerung auf.

Die Führungsbahnen weisen jeweils zumindest eine Stromschiene auf. Die zumindest eine Stromschiene weist vorteilhaft zumindest zwei Kontakte auf, wobei ein erster Kontakt einen ersten Pol bildet, zum Beispiel den + Pol, und ein zweiter Kontakt einen zweiten Pol bildet, zum Beispiel den - Pol. Es besteht aber auch die Möglichkeit, dass an den Kontakten Wechselstrom anliegt. Auch besteht die Möglichkeit, dass bei aus Metall gebildeten Trägern der Führungsbahnen pro Stromschiene nur ein Kontakt ausgebildet ist, wobei der eine in der Stromschiene ausgebildete Kontakt den ersten Pol bildet und die Träger den zweiten Pol bilden. Zweckmäßig sind die Träger aus einem elektrisch leitenden Material vorzugsweise Aluminium oder Eisen gebildet.

Das zumindest eine Bahnfahrzeug weist zumindest einen Stromabnehmer auf, der in die zumindest eine Stromschiene eingreift und das Bahnfahrzeug in den Führungsbahnen mit Energie versorgt. Der Stromabnehmer weist dabei vorteilhaft dieselbe Anzahl an Kontakten auf wie die zumindest eine Stromschiene. Eine Übermittlung von Aufträgen an die Fahrzeugsteuerung kann auf die Stromversorgung aufmoduliert werden, über zumindest einen zusätzlichen Kontakt in den Stromschienen erfolgen oder kann über eine zusätzliche drahtlose Verbindung erfolgen, wie beispielsweise WLAN.

Zumindest ein Teil des zumindest einen Kreuzungsbereichs ist frei von Stromschienen. Vorzugsweise ist der gesamte Kreuzungsbereich frei von Stromschienen. Hierdurch können die Bahnfahrzeuge den Kreuzungsbereich einfach passieren, ohne dass es zu Fehlkontakten zwischen Elementen der Bahnfahrzeuge und der Stromschienen kommt. Die Stromschienen sind vorteilhaft seitlich an den Führungsbahnen angebracht.

Das Regallager weist eine Systemsteuerung auf, die eine Spannung in der zumindest einen Stromschiene vorgibt. Je nach Anforderung kann dabei jede Stromschiene einzeln durch die Systemsteuerung angesteuert werden oder mehrere Stromschienen sind zu einem Cluster zusammengefasst und werden gemeinsam durch die Systemsteuerung angesteuert. Bei mehreren Führungsbahnen besteht auch die Möglichkeit, dass einzelne Stromschienen individuell angesteuert werden und andere Stromschienen in Clustern zusammengefasst angesteuert werden. So sind vorteilhaft je nach Ausführungsvariante die Stromschienen einzeln an die Systemsteuerung angeschlossen und/oder untereinander zu einem Cluster verbunden und als Cluster an die Systemsteuerung angeschlossen.

Das zumindest eine Bahnfahrzeug weist zumindest einen Kreuzungssensor und eine Stromspeichereinheit auf. Der zumindest eine Kreuzungssensor ist ausgebildet zu detektieren, ob sich das Bahnfahrzeug in einem Kreuzungsbereich befindet. Vorteilhaft ist der zumindest eine Kreuzungssensor durch einen optischen Sensor, induktiven Sensor oder kapazitiven Sensor gebildet, wobei entsprechend dem verwendeten Sensor Mittel im Kreuzungsbereich ausgebildet sind, mit welchen der Sensor interagieren kann und mittels welchen der Sensor eindeutig identifizieren kann, ob sich das Bahnfahrzeug gerade in einem Kreuzungsbereich befindet oder nicht. So ein Mittel kann beispielsweise durch ein im Kreuzungsbereich angebrachtes gebogenes Blech oder durch einen im Kreuzungsbereich angebrachten Reflektor gebildet sein. Die Stromspeichereinheit ist ausgebildet das Bahnfahrzeug temporär mit Energie zu versorgen. Die Stromspeichereinheit kann beispielsweise durch einen Power-Cap, eine Batterie oder durch eine Kombination von beidem gebildet sein.

Die Fahrzeugsteuerung ist mit dem zumindest einen Stromabnehmer, dem zumindest einen Kreuzungssensor, der zumindest einen Antriebseinheit und der zumindest einen Stromspeichereinheit verbunden und ist ausgebildet das Bahnfahrzeug:
- bei einer an dem zumindest einen Stromabnehmer detektierten ersten Spannung in einen Normalbetriebsmodus zu schalten, in welchem das zumindest eine Bahnfahrzeug auftragsgemäß arbeitet;
- bei einer an dem zumindest einen Stromabnehmer detektierten zweiten Spannung in einen Sicherheitsmodus zu schalten, in welchem die Fahrzeugsteuerung die zumindest eine Antriebseinheit, vorzugsweise alle gefahrbringenden Antriebseinheiten des zumindest einen Bahnfahrzeugs abschaltet;
- bei einer an dem zumindest einen Stromabnehmer detektierten dritten Spannung und bei Detektion des zumindest einen Kreuzungssensors, dass sich das zumindest eine Bahnfahrzeug in dem zumindest einen Kreuzungsbereich befindet, in einen Umsetzmodus zu schalten, in welchem das zumindest eine Bahnfahrzeug auftragsgemäß arbeitet, wobei die zumindest eine Stromspeichereinheit während des Umsetzmodus das zumindest eine Bahnfahrzeug mit Strom versorgt; und
- bei der an dem zumindest einen Stromabnehmer anliegenden dritten Spannung und bei Detektion des zumindest einen Kreuzungssensors, dass sich das zumindest eine Bahnfahrzeug außerhalb des zumindest einen Kreuzungsbereichs befindet, in einen Sicherheitsmodus zu schalten, in dem die Fahrzeugsteuerung die zumindest eine Antriebseinheit des Bahnfahrzeugs abschaltet.

Hierdurch ist der Vorteil erhalten, dass das erfindungsgemäße Regallager sehr sicher betrieben werden kann. Wird eine Begehung für einen Bereich des Regallagers angemeldet, schaltet die Systemsteuerung in diesem Bereich die Spannung der Stromschiene/Stromschienen von der ersten Spannung auf die zweite Spannung. Ein in diesem Bereich auf einer Führungsbahn befindliches Bahnfahrzeug wird dadurch sofort vom Normalbetriebsmodus in den Sicherheitsmodus geschaltet, in welchem die Fahrzeugsteuerung die Antriebseinheit des Bahnfahrzeugs abschaltet, wodurch dieses zum Stillstand gebracht wird. Befindet sich ein Bahnfahrzeug gerade in einem Kreuzungsbereich, führt dieses seine gemäß einem Auftrag zugeteilte Tätigkeit solange aus, bis es wieder mit einer Stromschiene Kontakt hat. Will das Bahnfahrzeug in einen zur Begehung angemeldeten Bereich einfahren und detektiert die Fahrzeugsteuerung des Bahnfahrzeuges beim Einfahren in den Bereich die zweite Spannung an der Stromschiene, dann schaltet das Bahnfahrzeug in den Sicherheitsmodus. Infolgedessen kann das erfindungsgemäße Regallager oder Bereiche davon für Begehungen des Regallagers oder für sonstige wichtige Reparatur-, Wartungs- oder Instandhaltungsarbeiten jederzeit verlässlich durch Veränderung der Spannung in den Stromschienen abgeschalten werden, obwohl in den Kreuzungsbereichen keine Stromschienen ausgebildet sind.

Detektiert die Fahrzeugsteuerung eines Bahnfahrzeugs an dem zumindest einen Stromabnehmer die dritte Spannung, dann wird durch die Fahrzeugsteuerung über den Kreuzungssensor auch überprüft, ob sich das Bahnfahrzeug gerade in einem Kreuzungsbereich befindet. Befindet sich das Bahnfahrzeug im Kreuzungsbereich, dann schaltet die Fahrzeugsteuerung das zumindest eine Bahnfahrzeug in den Umsetzmodus und führt seine gemäß einem Auftrag zugeteilte Tätigkeit weiterhin aus, wobei das Bahnfahrzeug im Umsetzmodus von einer Führungsbahn auf eine andere Führungsbahn umsetzt.

Wird aber durch die Fahrzeugsteuerung detektiert, dass sich das Bahnfahrzeug außerhalb eines Kreuzungsbereichs befindet, dann wird das Bahnfahrzeug in den Sicherheitsmodus geschaltet, in welchem die Fahrzeugsteuerung die zumindest eine gefahrbringende Antriebseinheit des Bahnfahrzeuges abschaltet und das Fahrzeug somit zum Stillstand gebracht wird. Das hat den Vorteil, dass insbesondere bei einem Stromausfall oder Not-Halt sichergestellt werden kann, dass das Bahnfahrzeug sicher zum Stillstand gebracht wird und es nicht weiterhin im Normalbetriebsmodus Ein- und Auflageraufträge abarbeitet, bis die Stromspeichereinheit leer ist.

Bevorzugt sind die erste und die zweite Spannung von 0V verschieden und/oder jeweils unterschiedliche Spannungsbereiche.

Vorteilhaft ist die erste Spannung mit 48V +/- 20% festzulegen. Es besteht auch die Möglichkeit, dass die erste Spannung ein Spannungsbereich zwischen 30V und 70V ist. Das heißt jede Spannung in diesem Bereich entspricht in der Fahrzeugsteuerung der ersten Spannung, wodurch das Bahnfahrzeug entsprechend in den Normalbetriebsmodus schaltet. Vorteilhaft ist die zweite Spannung mit 24V +/-20% festzulegen. Es besteht auch die Möglichkeit, dass die zweite Spannung ein Spannungsbereich zwischen 18V und 30V ist. Das heißt jede Spannung in diesem Bereich entspricht in der Fahrzeugsteuerung der zweiten Spannung, wodurch das Bahnfahrzeug entsprechend in den Sicherheitsmodus schaltet.

Die zweite Spannung ist ausreichend, um das zumindest eine Bahnfahrzeug auch im Sicherheitsbetrieb mit Strom zu versorgen. Hierdurch kann auch bei längeren sicherheitsrelevanten Abschaltungen des zumindest einen Bahnfahrzeugs, zum Beispiel bei langen Begehungen, das zumindest eine Bahnfahrzeug unmittelbar wieder seinen Betrieb aufnehmen und muss sich nicht erst nach Bereitstellen einer entsprechenden zum Betrieb der Fahrzeugsteuerung notwendigen Spannung hochfahren, um den Betrieb wieder aufnehmen zu können. Ist das Bahnfahrzeug über eine drahtlose Verbindung zum Empfang von Aufträgen mit der Systemsteuerung verbunden, kann diese Verbindung während des Sicherheitsmodus weiterhin aufrecht gehalten werden.

Es besteht die Möglichkeit, dass bei Detektion der zweiten Spannung sämtliche Antriebe des Bahnfahrzeugs abgeschaltet werden oder, dass ein Antrieb einer Aufnahmeeinheit des Bahnfahrzeugs, die zum Ein- und Auslagern von Artikeln ausgebildet ist, erst abgeschaltet wird, wenn ein gerade ein- oder auszulagernder Artikel fertig ein- oder ausgelagert wurde. Um bei einer Störung eine unerwartete Inbetriebnahme des Antriebs der Aufnahmeeinheit zu verhindern, weist die Fahrzeugsteuerung vorteilhaft ein Kontrollelement auf, das den Antrieb der Aufnahmeeinheit nach Detektion der zweiten Spannung auch bei noch nicht abgeschlossener Ein- oder Auslagerung von Artikeln abschaltet.

Bevorzugt ist die dritte Spannung mit 0V oder durch einen Spannungsbereich festzulegen, der 0V beinhaltet. Der Spannungsbereich ist vorteilhaft 0V bis 18V. Das heißt, dass jede Spannung in diesem Bereich in der Fahrzeugsteuerung der dritten Spannung entspricht.

Bevorzugt ist die Fahrzeugsteuerung ausgebildet im Normalbetriebsmodus und/oder im Sicherheitsmodus die Stromspeichereinheit zu laden. Hierdurch ist der Vorteil erhalten, dass das zumindest eine Bahnfahrzeug gleich nach dem Umschalten in den Normalbetriebsmodus wieder vollumfänglich funktionsfähig ist.

Zweckmäßig ist die Fahrzeugsteuerung ausgebildet im Sicherheitsmodus die Antriebseinheit des Bahnfahrzeugs so abzuschalten, dass die Fahrzeugsteuerung das Bahnfahrzeug gänzlich in einer Führungsbahn zum Stillstand bringt. Da das zumindest eine Bahnfahrzeug im zumindest einen Kreuzungsbereich keine sicherheitsgerichteten Befehle aufgrund des Fehlens der Stromschienen empfangen kann, arbeitet dieses solange im Umsetzmodus und führt seine gemäß einem Auftrag zugeteilte Tätigkeit aus, bis dieses an den Stromabnehmern eine zweite Spannung detektiert oder an den Stromabnehmern eine dritte Spannung detektiert und sich außerhalb des Kreuzungsbereichs befindet. Da der Stromabnehmer in einer bevorzugten Ausführungsvariante in Relation zu der Länge bzw. Breite des zumindest einen Bahnfahrzeugs nur einer geringe Länge aufweist, kann es vorkommen, dass das Bahnfahrzeug bei einer sofortigen Abschaltung zumindest teilweise im Kreuzungsbereich zum Stehen kommt und diesen somit blockieren würde. Infolgedessen ist es vorteilhaft, wenn das zumindest eine Bahnfahrzeug verzögert abgeschaltet wird, damit es noch aus dem Kreuzungsbereich ausfahren kann. Somit bleibt dieser frei und wird nicht durch ein Bahnfahrzeug oder Teile des Bahnfahrzeugs blockiert.

Vorteilhaft weist die Fahrzeugsteuerung einen Zähler auf, der zu zählen beginnt, sobald die Fahrzeugsteuerung in den Umsetzmodus schaltet, wobei die Fahrzeugsteuerung ausgebildet ist das zumindest eine Bahnfahrzeug in den Sicherheitsmodus zu schalten, falls das Bahnfahrzeug den Umsetzmodus nicht innerhalb eines Zählerlimits verlässt. Hierdurch ist der Vorteil erhalten, dass das zumindest eine Bahnfahrzeug auch bei einem Defekt, der möglicherweise nur temporär genau in einem Kreuzungsbereich auftritt, nicht von alleine bei einer Begehung wieder in Betrieb gesetzt wird. Infolgedessen kann die Sicherheit im Regallager für eine Person bei einer Begehung zusätzlich erhöht werden.

Je nach Anforderung und baulichen Gegebenheiten können die Führungsbahnen gerade oder abschnittsweise unter Bildung einer Kurve und/oder Steigstrecke gebogen sein. Vorteilhaft sind die Führungsbahnen so ausgebildet, dass ein zur Verfügung stehender Platz optimal genutzt werden kann.

Zweckmäßig weist das Regallager zumindest einen Durchschreitungsdetektor und/oder einen Begehungstaster auf, welcher/ welche mit der Systemsteuerung gekoppelt ist/ sind, wobei die Systemsteuerung ausgebildet ist in Abhängigkeit eines von dem Durchschreitungsdetektor bzw. Begehungstaster erzeugten Signals die an einer oder mehreren Stromschienen anliegende Spannung vorzugeben. Der Durchschreitungsdetektor ist vorteilhaft durch eine Lichtschranke oder durch ein Drehkreuz mit einem oder mehreren Armen gebildet. Der Begehungstaster ist vorteilhaft durch einen einfachen Knopf gebildet. Vorteilhaft ist weiter wenn in Kombination mit dem Begehungstaster auch zumindest eine Meldeleuchte vorgesehen ist, wodurch die Systemsteuerung der Person Hinweise zum aktuellen Betriebszustand des hinter dem Durchschreitungsdetektor liegenden Bereiches anzeigen kann. Durch den Durchschreitungsdetektor ist der Vorteil erhalten, dass bei Bewegung einer Person von einem im Regallager sicherheitsrelevant abgeschalteten Bereich in einen Bereich, der nicht abschaltet wurde, auch der nicht abgeschaltete Bereich bei Auslösen des Durchschreitungsdetektors abgeschaltet wird. Damit kann der betroffene abzuschaltende Bereich klein und restliche nicht abgeschaltete Bereiche produktiv gehalten werden ohne die Sicherheit für eine das Regallager begehende Person einzuschränken.

In einer weiteren Ausführungsvariante des erfindungsgemäßen Systems ist die Fahrzeugsteuerung ausgebildet aufgrund von an der Stromschiene gemessenen Charakteristika eine Bitfolge zu erkennen und das Bahnfahrzeug
- bei einer an dem zumindest einen Stromabnehmer detektierten ersten Bitfolge in einen Normalbetriebsmodus zu schalten, in welchem das zumindest eine Bahnfahrzeug auftragsgemäß arbeitet;
- bei einer an dem zumindest einen Stromabnehmer detektierten zweiten Bitfolge in einen Sicherheitsmodus zu schalten, in welchem die Fahrzeugsteuerung die zumindest eine Antriebseinheit, vorzugsweise alle gefahrbringenden Antriebseinheiten des zumindest einen Bahnfahrzeugs abschaltet;
- bei einer an dem zumindest einen Stromabnehmer detektierten dritten Bitfolge oder bei Detektion von keiner ersten oder zweiten Bitfolge und bei Detektion des zumindest einen Kreuzungssensors, dass sich das zumindest eine Bahnfahrzeug in dem zumindest einen Kreuzungsbereich befindet, in einen Umsetzmodus zu schalten, in welchem das zumindest eine Bahnfahrzeug auftragsgemäß arbeitet, wobei die zumindest eine Stromspeichereinheit während des Umsetzmodus das zumindest eine Bahnfahrzeug mit Strom versorgt; und
- bei der an dem zumindest einen Stromabnehmer anliegenden dritten Bitfolge oder bei Detektion von keiner ersten oder zweiten Bitfolge und bei Detektion des zumindest einen Kreuzungssensors, dass sich das zumindest eine Bahnfahrzeug außerhalb des zumindest einen Kreuzungsbereichs befindet, in einen Sicherheitsmodus zu schalten, in dem die Fahrzeugsteuerung die zumindest eine gefahrbringende Antriebseinheit des Bahnfahrzeugs abschaltet.

Weitere vorteilhafte Ausführungsvarianten des erfindungsgemäßen Regallagers werden in weiterer Folge anhand der Figuren näher erläutert.

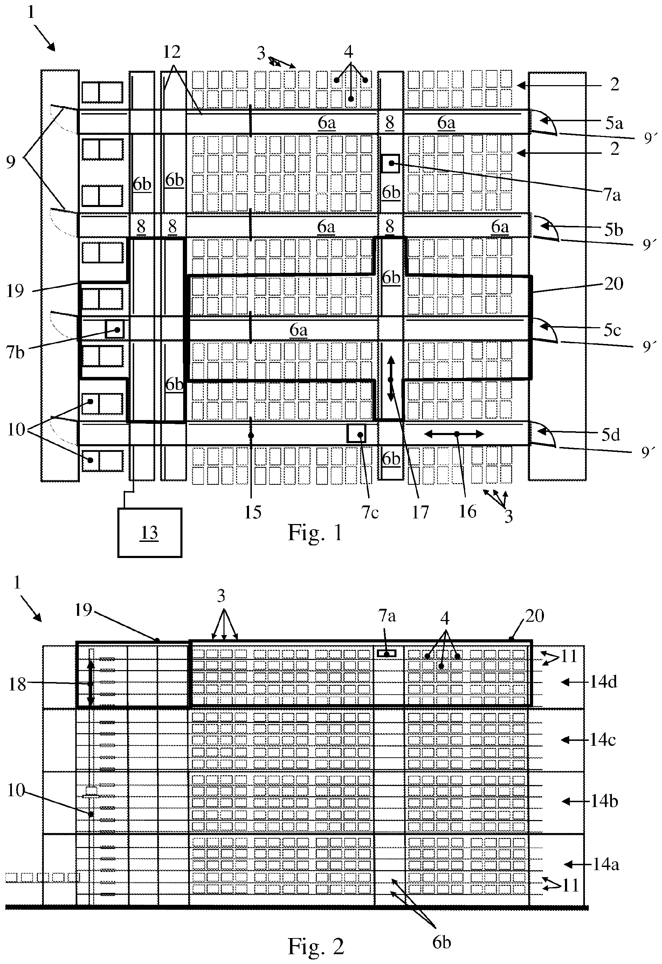

Figuren 1 und 2 zeigen eine Ausführungsvariante eines erfindungsgemäßen Regallagers in einer schematischen Draufsicht und einer schematischen Seitenansicht.

Figuren 1 und 2 zeigen eine Ausführungsvariante eines erfindungsgemäßen Regallagers 1 in einer schematischen Draufsicht. Das Regallager 1 umfasst mehrere Regale 2 mit einer Vielzahl an Lagerplätzen 3 in verschiedenen Ebenen 11 zum Lagern von mit Artikeln befüllten Kartons 4 oder Behälter, wobei in jedem Lagerplatz 3 hintereinander angeordnet zwei Kartons 4 bzw. Behälter lagerbar sind. Zwischen jeweils zwei Regalen 2 verlaufen Regalgassen 5a bis 5d. Jede Regalgasse 5a bis 5d läuft über vier Stockwerke 14a bis 14d, wobei jedes Stockwerk 14a bis 14d fünf Ebenen 11 aufweist. Jedes Stockwerk 14a bis 14d weist pro Regalgasse 5a bis 5d eine Tür 9 und eine Tür 9' auf und einen durch eine Lichtschranke 15 gebildeten Durchschreitungsdetektor.

Zwischen den Regalgassen 5 sind Lifte 10 ausgebildet, die Kartons 4 oder Behälter zwischen den Ebenen 11 des Regallagers 1 in einer vertikalen Richtung 18 auf und ab transportieren können.

Weiterhin weist das Regallager 1 in jeder Ebene 11 Führungsbahnen 6a und 6b und drei Bahnfahrzeuge 7a, 7b und 7c auf, wobei die Führungsbahnen 6a entlang der Regalgassen 5a bis 5d verlaufen und die Führungsbahnen 6b quer zu den Regalgassen 5a bis 5d verlaufen. Vorteilhaft weist das Regallager 1 mehr als drei Bahnfahrzeuge 7a, 7b und 7c pro Ebene 11 auf, das Regallager 1 kann aber auch nur ein oder zwei Bahnfahrzeug 7a, 7b oder 7c pro Ebene 11 aufweisen. Das Regallager 1 weist mehrere Kreuzungsbereiche 8 auf, in denen jeweils zwei Führungsbahnen 6a und 6b zusammenlaufen. Die Führungsbahnen 6a und 6b laufen in einem Winkel von 90° in einer Ebene 11 im Kreuzungsbereich 8 zusammen. Die Führungsbahnen 6a und 6b sind bei dieser Ausführungsvariante des Regallagers 1 im Betrieb des Regallagers 1 horizontal ausgebildet.

Die Bahnfahrzeuge 7a, 7b und 7c weisen jeweils eine nicht dargestellte Fahrzeugsteuerung und eine nicht dargestellte Antriebseinheit auf, wobei die Bahnfahrzeuge 7a, 7b und 7c jeweils durch die Fahrzeugsteuerung gesteuert und durch die Antriebseinheit angetrieben entlang der Führungsbahnen 6a und 6b verfahrbar sind. Weiterhin weisen die Bahnfahrzeuge 7a, 7b und 7c jeweils an ersten einander gegenüberliegenden Seitenbereichen nicht dargestellte erste Räder auf, die zum Fahren in eine erste Richtung 16 entlang der Führungsbahnen 6a ausgebildet sind und wobei an zweiten einander gegenüberliegenden Seitenbereichen der Bahnfahrzeuge 7a, 7b und 7c zweite nicht dargestellte in vertikaler Richtung 18 aus- und einfahrbare Räder angeordnet sind, die zum Fahren in eine um 90° zur ersten Richtung versetzten zweiten Richtung 17 entlang der Führungsbahnen 6b ausgebildet sind. Die Bahnfahrzeuge 7a, 7b und 7c können über die Kreuzungsbereiche 8 entweder zwischen Führungsbahnen 6a, oder Führungsbahnen 6b, oder von einer Führungsbahn 6a auf eine Führungsbahn 6b oder von einer Führungsbahn 6b auf eine Führungsbahn 6a umsetzen.

In den Führungsbahnen 6a und 6b sind durchgehend Stromschienen 12 ausgebildet und die Bahnfahrzeuge 7a, 7b und 7c weisen jeweils zwei nicht dargestellte Stromabnehmer auf, die ausgebildet sind in die Stromschienen 12 einzugreifen, wenn sich die Bahnfahrzeug 7a, 7b und 7c entlang der Führungsbahnen 6a und 6b bewegen, um die Bahnfahrzeuge 7a, 7b und 7c mit Energie zu versorgen. Die Kreuzungsbereiche 8 sind frei von Stromschienen 12. Die Stromschienen 12 sind zu Clustern zusammengefasst an eine Systemsteuerung 13 des Regallagers 1 angeschlossen. Die Verbindung zwischen den Stromschienen 12 und der Systemsteuerung 13 ist in Figur 1 nur schematisch angedeutet.

Die Stromschiene 12 einer Führungsbahn 6a ist vorteilhaft mit sämtlichen direkt darüber und/oder darunter liegenden Stromschienen 12 der Führungsbahnen 6a innerhalb eines Stockwerks 14a, 14b, 14c oder 14d jeweils zu einem Cluster zusammengefasst und als Cluster an die Systemsteuerung 13 angeschlossen. Die Systemsteuerung 13 ist ausgebildet eine Spannung in den Stromschienen 12 eines Clusters vorzugeben.

Es sei hier aber noch darauf hingewiesen, dass die Stromschienen 12 einzeln an die Systemsteuerung 13 angeschlossen werden können oder in beliebigen Clustern zusammengefasst mit der Systemsteuerung 13 verbunden sein können.

Die Bahnfahrzeuge 7a, 7b und 7c sind ausgebildet Kartons 4 oder Behälter mit Artikeln gemäß zumindest eines Auftrags in die Lagerplätze 3 einzulagern oder auszulagern. Die dazu nötigen Befehle werden der Fahrzeugsteuerung der Bahnfahrzeuge 7a, 7b oder 7c entweder über eine Funkverbindung, zum Beispiel WLAN, oder über die Stromschienen 12 durch Aufmodulierung eines Datensignals übermittelt. Zum Ein- und Auslagern von Kartons 4 bzw. Behälter in die Lagerplätze 3/ von den Lagerplätzen 3 und zur Übergabe von Kartons 4 bzw. Behälter an die Lifte 10 weisen die Bahnfahrzeuge 7a, 7b und 7c jeweils eine Aufnahmeeinheit auf. Diese ist hierin nicht näher beschrieben, da sie dem Fachmann allgemein bekannt ist.

Weiterhin weisen die Bahnfahrzeuge 7a, 7b und 7c jeweils einen nicht dargestellten Kreuzungssensor und eine Stromspeichereinheit auf. Der Kreuzungssensor ist durch einen induktiven Sensor gebildet und ist ausgebildet zu detektierten, ob sich ein Bahnfahrzeug 7a, 7b oder 7c in einem Kreuzungsbereich 8 befindet. Dazu sind in den Kreuzungsbereichen 8 nicht dargestellt Bleche montiert, wobei der Kreuzungssensor anschlägt, sobald er ein derartiges Blech detektiert. Die Stromspeichereinheit ist ausgebildet, das Bahnfahrzeug 7a, 7b oder 7c temporär mit Energie zu versorgen. Der Kreuzungssensor kann aber auch durch einen kapazitiven oder optischen Sensor gebildet sein.

Bei jedem Bahnfahrzeug 7a, 7b oder 7c ist die Fahrzeugsteuerung mit den Stromabnehmern, mit dem Kreuzungssensor, mit der Antriebseinheit und mit der Stromspeichereinheit verbunden.

In einem normalen Betrieb des Regallagers 1 liegt an sämtlichen Stromschienen 12 gesteuert durch die Systemsteuerung 13 eine erste Spannung, beispielsweise 48 Volt, an. Diese wird durch die Fahrzeugsteuerung der Bahnfahrzeuge 7a, 7b und 7c bei Fahrten in den Führungsbahnen 6a und 6b über die Stromabnehmer detektiert und die Bahnfahrzeuge 7a, 7b und 7c arbeiten im Normalbetriebsmodus. Im Normalbetriebsmodus arbeiten die Bahnfahrzeuge 7a, 7b und 7c jeweils von der Systemsteuerung 13 übermittelte Aufträge ab, wobei sie ihre Energie von den Stromschienen 12 beziehen. Ein Auftrag kann zum Beispiel sein einen Karton 4 oder eine Behälter aus einem bestimmten Lagerplatz 3 abzuholen und an einen Lift 10 zu übergeben, oder einen Karton 4 oder eine Behälter von einem Lift 10 abzuholen und in einen bestimmten Lagerplatz 3 einzulagern.

Fährt ein Bahnfahrzeug 7a, 7b oder 7c zum Abarbeiten eines Auftrags in einen Kreuzungsbereich 8 ein, detektiert dieses aufgrund des Fehlens der Stromschiene 12 im Kreuzungsbereich 8 nicht mehr die erste Spannung, sondern eine dritte Spannung von 0V an den Stromabnehmern und detektiert mittels des Kreuzungssensors, dass es sich in einem Kreuzungsbereich 8 befindet. Im diesem Fall schaltet die Fahrzeugsteuerung des Bahnfahrzeugs 7a, 7b oder 7c in einen Umsetzmodus. Im Umsetzmodus arbeitet das Bahnfahrzeug 7a, 7b oder 7c auftragsgemäß weiter, wobei das Bahnfahrzeug 7a, 7b oder 7c im Umsetzmodus über die Stromspeichereinheit mit Energie versorgt wird und zwischen zwei Führungsbahnen 6a, zwischen zwei Führungsbahnen 6b, von einer Führungsbahn 6 auf eine Führungsbahn 6b oder von einer Führungsbahn 6b auf eine Führungsbahn 6a wechselt.

Beim Umsetzen zwischen einer Führungsbahn 6a und einer Führungsbahn 6b fährt das Bahnfahrzeug 7a, 7b oder 7c beispielsweise angetrieben durch die ersten Räder in den Kreuzungsbereich 8 ein. Durch Ausfahren der zweiten Räder in vertikaler Richtung 18 kann das Bahnfahrzeug 7a, 7b oder 7c auf den zweiten Rädern aus dem Kreuzungsbereich 8 in die Führungsbahn 6b ausfahren.

Beim Umsetzen zwischen einer Führungsbahn 6b und einer Führungsbahn 6a fährt das Bahnfahrzeug 7a, 7b oder 7c beispielsweise angetrieben durch die zweiten Räder in den Kreuzungsbereich 8 ein. Durch Einfahren der zweiten Räder in vertikaler Richtung 18 kann das Bahnfahrzeug 7a, 7b oder 7c auf den ersten Rädern aus dem Kreuzungsbereich 8 in die Führungsbahn 6a ausfahren.

Beim Umsetzen zwischen einer Führungsbahn 6a und einer weiteren Führungsbahn 6a oder einer Führungsbahn 6b und einer weiteren Führungsbahn 6b durchfährt das Bahnfahrzeug 7a, 7b oder 7c den Kreuzungsbereich 8 geradlinig.

Fährt das Bahnfahrzeug 7a, 7b oder 7c wieder aus dem Kreuzungsbereich 8 aus und fährt in eine Führungsbahn 6a oder 6b ein, detektiert dieses wieder die erste Spannung an den Stromabnehmern und es wird das Bahnfahrzeug 7a, 7b oder 7c wieder über die Stromschiene 12 mit Energie versorgt und die Stromspeichereinheit wird wieder aufgeladen.

In weiterer Folge wird eine sicherheitsgerichtete Abschaltung eines Teils des Regallagers 1 näher beschrieben, wobei die sicherheitsgerichtete Abschaltung als Beispiel anhand der Regalgasse 5c Stockwerk 14d näher ausgeführt wird. Es können aber in ähnlicher Weise sämtliche Stockwerke 14a bis 14d der weiteren Regalgassen 5a, 5b oder 5c abgeschalten werden, bzw. auch mehrere Stockwerke 14a bis 14d der Regalgassen 5a bis 5d gleichzeitig abgeschalten werden.

Will eine Person zur Durchführung von Wartungsarbeiten die Regalgasse 5c im Stockwerk 14d begehen, drückt diese einen Begehungstaster, der im Bereich der Tür 9' für das Stockwerk 14d der Regalgasse 5c angeordnet ist. Es sei hier noch darauf hingewiesen, dass aus Gründen der Einfachheit kein Zugang zu den einzelnen Stockwerken 14a bis 14d in den Figuren 1 und 2 eingezeichnet ist. Die Stockwerke 14a bis 14d sind aber vorteilhaft über eine oder mehrere Stiegen durch die Person leicht erreichbar.

Der Begehungstaster ist mit der Systemsteuerung 13 verbunden, wobei durch Drücken des Begehungstasters die Systemsteuerung 13 ein Signal an die Bahnfahrzeuge sendet, den betroffenen Bereich, in diesem Fall ein Bereich 20, zu verlassen bzw. nicht in diesen neu einzufahren. An einer bei dem Begehungstaster angebrachten Meldeleuchte kann der Person der Status des zu begehenden Bereiches 20 angezeigt werden. Durch Öffnen der Tür 9' legt die Systemsteuerung an die Stromschienen 12 der Führungsbahnen 6a der Ebenen 11 des Stockwerks 14d der Regalgasse 5c in dem Bereich 20 eine zweite Spannung an, die 24V entspricht. Darüber hinaus wird in dem Bereich 20 auch an alle Stromschienen 12 der an diese Führungsbahnen 6a direkt über einen Kreuzungsbereich 8 angrenzenden Führungsbahnen 6b durch die Systemsteuerung 13 die zweite Spannung von 24V angelegt. Siehe insbesondere Figur 1. Befindet sich ein Bahnfahrzeug 7a, 7b oder 7c gerade in diesem Teil des Regallagers 1, detektiert die Fahrzeugsteuerung des Bahnfahrzeugs 7a, 7b oder 7c über die Stromabnehmer die auf die zweite Spannung veränderte Spannung und schaltet das Bahnfahrzeug 7a, 7b oder 7c in einen Sicherheitsmodus, in dem die Fahrzeugsteuerung die Antriebseinheit des Bahnfahrzeugs 7a, 7b oder 7c abschaltet. Vorteilhaft werden auch die Antriebe, zum Beispiel Teleskopantriebe, Hubantriebe, etc., der Aufnahmeeinheit abgeschaltet. Dies geschieht zum Beispiel mittels eines Relais oder mittels eines Halbleiter-Schaltelements, welches durch die Fahrzeugsteuerung angesteuert wird, wodurch die Antriebseinheit(en) spannungslos geschaltet wird/werden. Dadurch werden vorteilhaft sämtliche Bewegungen des Bahnfahrzeugs 7a, 7b oder 7c zum Stillstand gebracht. Große und schwere Bahnfahrzeuge 7a, 7b oder 7c weisen vorteilhaft zusätzlich gebremste Räder auf, um die Bahnfahrzeuge schneller zum Stillstand zu bringen. Es besteht aber auch die Möglichkeit, dass die Antriebe der Aufnahmeeinheit verzögert abgeschaltet werden, um einen etwaigen gerade im Gange befindlichen Ein- oder Auslagervorgang noch fertig zu stellen.

Befindet sich ein Bahnfahrzeug 7a, 7b oder 7c gerade im Umsetzmodus in einem Kreuzungsbereich 8, wodurch es keinen Kontakt zu dem Stromschienen 12 hat, arbeitet dieses solange auftragsgemäß, bis es wieder Kontakt mit einer Stromschiene 12 hat. Führt diese Stromschiene 12 die zweite Spannung, wird dies von der Fahrzeugsteuerung detektiert und das Bahnfahrzeug 7a, 7b oder 7c wird in den Sicherheitsmodus geschaltet und bleibt durch abschalten der Antriebseinheit stehen. Vorteilhaft bleibt das Bahnfahrzeug 7a, 7b oder 7c dabei so stehen, dass es noch aus dem Kreuzungsbereich 8 ausfährt, um diesen nicht zu versperren. Somit steht der Kreuzungsbereich 8 einem anderen Bahnfahrzeug 7a, 7b oder 7c zur Verfügung, das beispielsweise von einer Führungsschiene 6a oder 6b mit einer an der Stromschiene 12 anliegenden ersten Spannung auf eine andere Führungsschiene 6a oder 6b mit einer an der Stromschiene 12 anliegenden ersten Spannung umsetzen will, um einen Auftrag abzuarbeiten.

Durchschreitet die Person bei der Begehung den Durchschreitungsdetektor 15 in der Regalgasse 5c im Stockwerk 14d wird durch die Systemsteuerung 13 auch der Bereich 19 der Regalgasse 5c im Stockwerk 14d sicherheitsrelevant abgeschaltet, wobei zusätzlich zu der Führungsbahn 6a in der Regalgasse 5c im Bereich 19 auch noch die an die Führungsbahn 6a über die Kreuzungsbereiche 8 angrenzenden Führungsbahnen 6b sicherheitsgerichtet abgeschaltet werden. Siehe insbesondere Figur 1. Demzufolge würde das Bahnfahrzeug 7b in den Sicherheitsmodus schalten.

In dem Fall, dass es beispielsweise zu einem Stromausfall im Regallager 1 kommt sind die Stromschienen 12 im Wesentlichen sofort spannungsfrei und es liegt die dritte Spannung von 0V an den Stromschienen 12 an. Um nicht ein Sicherheitsrisiko bei einer Begehung darzustellen und eine plötzliche Bewegung eines Bahnfahrzeugs 7a, 7b oder 7c zu verhindern, schaltet die Fahrzeugsteuerung die Antriebseinheit des Bahnfahrzeugs 7a, 7b oder 7c bei Detektion von der dritten Spannung und bei Detektion des Kreuzungsbereichssensors, dass sich das Bahnfahrzeug 7a, 7b oder 7c außerhalb des Kreuzungsbereichs 8, also in einer Führungsbahn 6a oder 6b, befindet, ab und in einen Sicherheitsmodus. Im Sicherheitsmodus steht das Bahnfahrzeug 7a, 7b oder 7c still. Befindet sich ein Bahnfahrzeug 7a, 7b oder 7c während des Stromausfalls gerade im Umsetzmodus in einem Kreuzungsbereich 8, fährt dieses durch die Versorgung der Stromspeichereinheit solange weiter, bis der Kreuzungssensor detektiert, dass sich das Bahnfahrzeug 7a, 7b oder 7c außerhalb des Kreuzungsbereichs 8 befindet.

Es sei hier noch darauf hingewiesen, dass die Bereiche 19 und 20 auch über mehr oder weniger Führungsbahnen 6a bzw. 6b ausgedehnt sein können und dass die Durchschreitungsdetektoren 15 auch an anderen Positionen im Regallager 1 ausgebildet sein können.

## Patentansprüche

1. Regallager (1) zum Lagern von Artikeln in Lagerplätzen (3) von Regalen (2), mit zumindest einer Regalgasse (5a, 5b, 5c, 5d), die zwischen zumindest zwei Regalen (2) ausgebildet ist, mit zumindest zwei Führungsbahnen (6a, 6b) und mit zumindest einem eine Fahrzeugsteuerung und zumindest eine Antriebseinheit aufweisenden Bahnfahrzeug (7a, 7b, 7c), welches auf den Führungsbahnen (6a, 6b) zum Ein- und Auslagern der Artikel gemäß zumindest eines Auftrags von der Fahrzeugsteuerung gesteuert durch die Antriebseinheit angetrieben verfahrbar ist, wobei die Führungsbahnen (6a, 6b) in zumindest einem Kreuzungsbereich (8) zusammenlaufen und das Bahnfahrzeug (7a, 7b, 7c) über den Kreuzungsbereich (8) zwischen den Führungsbahnen (6a, 6b) wechselt, **dadurch gekennzeichnet, dass** in den Führungsbahnen (6a, 6b) jeweils vorzugsweise durchgehend zumindest eine Stromschiene (12) und an dem Bahnfahrzeug (7a, 7b, 7c) zumindest ein Stromabnehmer ausgebildet ist, der in die Stromschiene (12) eingreift und das Bahnfahrzeug (7a, 7b, 7c) in den Führungsbahnen (6a, 6b) mit Energie versorgt, wobei das Regallager (2) eine Systemsteuerung (13) aufweist, die eine Spannung in der Stromschiene (12) vorgibt, dass zumindest ein Teil des zumindest einen Kreuzungsbereichs (8) frei von Stromschienen (12) ist,
dass das Bahnfahrzeug (7a, 7b, 7c) zumindest einen Kreuzungssensor und eine Stromspeichereinheit aufweist, wobei der Kreuzungssensor ausgebildet ist zu detektieren, ob sich das Bahnfahrzeug (7a, 7b, 7c) im Kreuzungsbereich (8) befindet, und wobei die Stromspeichereinheit ausgebildet ist das Bahnfahrzeug (7a, 7b, 7c) temporär mit Energie zu versorgen, und dass die Fahrzeugsteuerung mit dem Stromabnehmer, mit dem Kreuzungssensor, der Antriebseinheit und der Stromspeichereinheit verbunden ist und ausgebildet ist das Bahnfahrzeug (7a, 7b, 7c)
- bei einer an dem Stromabnehmer detektierten ersten Spannung in einen Normalbetriebsmodus zu schalten, in dem das Bahnfahrzeug (7a, 7b, 7c) auftragsgemäß arbeitet,
- bei einer an dem Stromabnehmer detektierten zweiten Spannung in einen Sicherheitsmodus zu schalten, in dem die Fahrzeugsteuerung die Antriebseinheit des Bahnfahrzeugs (7a, 7b, 7c) abschaltet,
- bei einer an dem Stromabnehmer detektierten dritten Spannung und bei Detektion des Kreuzungssensors, dass sich das Bahnfahrzeug (7a, 7b, 7c) in dem Kreuzungsbereich (8) befindet, in einen Umsetzmodus zu schalten, in dem das Bahnfahrzeug (7a, 7b, 7c) auftragsgemäß arbeitet, wobei die Stromspeichereinheit während des Umsetzmodus das Bahnfahrzeug (7a, 7b, 7c) mit Strom versorgt, und
- bei der an dem Stromabnehmer detektierten dritten Spannung und bei Detektion des Kreuzungssensors (8), dass sich das Bahnfahrzeug (7a, 7b, 7c) außerhalb des Kreuzungsbereichs (8) befindet, in einen Sicherheitsmodus zu schalten, in dem die Fahrzeugsteuerung die Antriebseinheit des Bahnfahrzeugs (7a, 7b, 7c) abschaltet.

2. Regallager (1) nach Anspruch 1, **dadurch gekennzeichnet, dass** die erste und die zweite Spannung von 0V verschieden sind und jeweils unterschiedliche Spannungsbereiche sind.

3. Regallager (1) nach einem der Ansprüche 1 oder 2, **dadurch gekennzeichnet, dass** die dritte Spannung 0V ist oder durch einen Spannungsbereich gebildet ist, der 0V beinhaltet.

4. Regallager (1) nach einem der Ansprüche 1 bis 3, **dadurch gekennzeichnet, dass** die Fahrzeugsteuerung ausgebildet ist bei einer am Stromabnehmer detektierten ersten Spannung und/oder detektierten zweiten Spannung die Stromspeichereinheit zu laden.

5. Regallager (1) nach einem der Ansprüche 1 bis 4, **dadurch gekennzeichnet, dass** die Fahrzeugsteuerung ausgebildet ist im Sicherheitsmodus die Antriebseinheit des Bahnfahrzeugs (7a, 7b, 7c) so abzuschalten, dass die Fahrzeugsteuerung das Bahnfahrzeug (7a, 7b, 7c) gänzlich in einer Führungsbahn (6a, 6b) zum Stillstand bringt.

6. Regallager (1) nach einem der Ansprüche 1 bis 5, **dadurch gekennzeichnet, dass** die Fahrzeugsteuerung einen Zähler aufweist, der zu zählen beginnt sobald die Fahrzeugsteuerung in den Umsetzmodus schaltet, wobei die Fahrzeugsteuerung ausgebildet ist das Bahnfahrzeug (7a, 7b, 7c) in den Sicherheitsmodus zu schalten, falls das Bahnfahrzeug (7a, 7b, 7c) den Umsetzmodus nicht innerhalb eines Zählerlimits verlässt.

7. Regallager (1) nach einem der Ansprüche 1 bis 6, **dadurch gekennzeichnet, dass** das Regallager (1) zumindest einen Durchschreitungsdetektor aufweist, welcher mit der Systemsteuerung (13) gekoppelt ist, wobei die Systemsteuerung (13) ausgebildet ist in Abhängigkeit eines von dem Durchschreitungsdetektor erzeugten Signals die an den Stromschienen (12) anliegende Spannung vorzugeben.

8. Regallager (1) nach einem der Ansprüche 1 bis 7, **dadurch gekennzeichnet, dass** die Führungsbahnen (6a, 6b) gerade oder abschnittsweise unter Bildung einer Kurve oder Steig/Gefällestrecke gebogen sind.

9. Regallager (1) nach einem der Ansprüche 1 bis 8, **dadurch gekennzeichnet, dass** die Führungsbahnen (6a, 6b) einzeln mit der Systemsteuerung (13) verbunden sind und/oder in Clustern zusammengefasst mit der Systemsteuerung (13) verbunden sind.

10. Regallager (1) nach einem der Ansprüche 1 bis 9, **dadurch gekennzeichnet, dass** die zumindest zwei Führungsbahnen (6a, 6b) im Kreuzungsbereich (8) in einer insbesondere horizontalen Ebene (11) vorzugsweise in einem Winkel von 90 Grad zueinander zusammenlaufen.

11. Regallager nach einem der Ansprüche 1 bis 10, **dadurch gekennzeichnet, dass** die zumindest zwei Führungsbahnen zueinander geneigt, insbesondere in einem Winkel von 30°, 45° oder 90° zueinander geneigt, angeordnet sind.

12. Regallager (1) nach einem der Ansprüche 1 bis 11, **dadurch gekennzeichnet, dass** das Regallager (1) eine Vielzahl von Führungsbahnen (6a, 6b) und eine Vielzahl von Kreuzungsbereichen (8) aufweist, wobei in jedem Kreuzungsbereich (8) zumindest zwei bis maximal sechs Führungsbahnen (6a, 6b) zusammenlaufen.

13. Regallager (1) nach einem der Ansprüche 1 bis 12, **dadurch gekennzeichnet, dass** zumindest eine Führungsbahn (6a, 6b) in der Regalgasse (5a, 5b, 5c) verläuft.

14. Regallager nach einem der Ansprüche 1 bis 13, **dadurch gekennzeichnet, dass** zumindest eine Führungsbahn beabstandet zu den Regalen verläuft.

## Claims

1. A racking (1) for storing articles in storing locations (3) of racks (2) having at least one rack corridor (5a, 5b, 5c, 5d), which is formed between at least two racks (2), having at least two guiding tracks (6a, 6b) and at least one rail vehicle (7a, 7b, 7c) having a vehicle control and at least one drive unit, which may be moved controlled by the vehicle control and driven by the drive unit on the guiding tracks (6a, 6b) for storing and retrieving the articles according to at least one order, wherein the guiding tracks (6a, 6b) merge at least in one intersection area (8) and wherein the rail vehicle (7a, 7b, 7c) changes between the guiding tracks (6a, 6b) across the intersection area (8), **characterized in that** within the guiding tracks (6a, 6b) there is preferably formed respectively continuously at least one current bar (12) and at the rail vehicle (7a, 7b, 7c) there is formed at least one current receiver engaging with the current bar (12) and supplying the rail vehicle (7a, 7b, 7c) in the guiding tracks (6a, 6b) with energy, wherein the rack (2) has a system control (13) providing a voltage within the current bar (12), such that at least a part of the at least one intersection area (8) is free of current bars (12),
that the rail vehicle (7a, 7b, 7c) has at least one intersection sensor and a current storage unit, wherein the intersection sensor is configured to detect whether the rail vehicle (7a, 7b, 7c) is within the intersection area (8) and wherein the current storage unit is configured to temporarily supply the rail vehicle (7a, 7b, 7c) with energy, and that the vehicle control is connected to the current receiver, to the intersection sensor, the drive unit and the current storage unit and configured to switch the rail vehicle (7a, 7b, 7c)
- at a first voltage detected at the current receiver into a normal operation mode, in which the rail vehicle (7a, 7b, 7c) operates according to the order,
- at a second voltage detected at the current receiver into a safety mode, in which the vehicle control switches off the drive unit of the rail vehicle (7a, 7b, 7c),
- at a third voltage detected at the current receiver and upon detection of the intersection sensor (8) that the rail vehicle (7a, 7b, 7c) is within the intersection area (8) into a transfer mode, in which the rail vehicle (7a, 7b, 7c) operates according to the order, wherein the current storage unit, in the transfer mode, supplies the rail vehicle (7a, 7b, 7c) with current and
- at the third voltage detected at the current receiver and upon detection of the intersection sensor (8) that the rail vehicle (7a, 7b, 7c) is outside of the intersection area (8) into a safety mode, in which the vehicle control switches off the drive unit of the rail vehicle (7a, 7b, 7c).

2. A racking (1) according to claim 1, **characterized in that** the first and the second voltage of 0V are different and respectively different voltage ranges.

3. A racking (1) according to any of claims 1 or 2, **characterized in that** the third voltage is 0V or formed by a voltage range including 0V.

4. A racking (1) according to any of claims 1 to 3, **characterized in that** the vehicle control is configured to charge the current storage unit at a first voltage and/or second voltage detected at the current receiver.

5. A racking (1) according to any of claims 1 to 4, **characterized in that** the vehicle control is configured to switch off the drive unit of the rail vehicle (7a, 7b, 7c) in the safety mode such that the vehicle control completely stops the rail vehicle (7a, 7b, 7c) within a guiding track (6a, 6b).

6. A racking (1) according to any of claims 1 to 5, **characterized in that** the vehicle control has a counter starting to count as soon as the vehicle control switches into the transfer mode, wherein the vehicle control is configured to switch the rail vehicle (7a, 7b, 7c) into the safety mode if the rail vehicle (7a, 7b, 7c) does not exit the transfer mode within a counter limit.

7. A racking (1) according to any of claims 1 to 6, **characterized in that** das racking (1) has at least one passage sensor, which is coupled to the system control (13), wherein the system control (13) is configured to provide, as a function of a signal generated by the passage detector, the voltage applied at the current bars (12).

8. A racking (1) according to any of claims 1 to 7, **characterized in that** the guiding tracks (6a, 6b) are straight or bent in some sections, forming a curve or an inclined / declined distance.

9. A racking (1) according to any of claims 1 to 8, **characterized in that** the guiding tracks (6a, 6b) are individually connected to the system control (13) and/or are connected to the system control (13) combined in clusters.

10. A racking (1) according to any of claims 1 to 9, **characterized in that** the at least two guiding tracks (6a, 6b) in the intersection area (8) merge in an in particular horizontal plane (11) preferably at an angle of 90 degrees.

11. A racking according to any of claims 1 to 10, **characterized in that** the at least two guiding tracks are arranged inclined towards one another, in particular at an angle of 30°, 45° or 90°.

12. A racking (1) according to any of claims 1 to 11, **characterized in that** the racking (1) has a plurality of guiding tracks (6a, 6b) and a plurality of intersection areas (8), wherein within each intersection area (8) at least two up to at the most six guiding tracks (6a, 6b) will merge.

13. A racking (1) according to any of claims 1 to 12, **characterized in that** at least one guiding track (6a, 6b) extends within the rack corridor (5a, 5b, 5c).

14. A racking according to any of claims 1 to 13, **characterized in that** at least one guiding track extends spaced apart from the racks.

## Revendications

1. Entrepôt à rayonnages (1) servant à entreposer des articles dans des emplacements de stockage (3) de rayonnages (2), comprenant au moins une allée de rayonnages (5a, 5b, 5c, 5d) qui est conçue entre au moins deux rayonnages (2), au moins deux voies de guidage (6a, 6b) et au moins un véhicule roulant (7a, 7b, 7c) présentant une commande de véhicule et au moins une unité d'entraînement, ledit véhicule roulant pouvant être déplacé sur les voies de guidage (6a, 6b) d'une manière contrôlée par l'intermédiaire de l'unité d'entraînement dans le but de placer les articles dans l'entrepôt et de les sortir de celui-ci conformément à au moins un ordre de la commande de véhicule, dans lequel les voies de guidage (6a, 6b) convergent dans au moins une zone d'intersection (8) et le véhicule roulant (7a, 7b, 7c) passe à travers la zone d'intersection (8) entre les voies de guidage (6a, 6b), **caractérisé en ce qu'**au moins une barre omnibus (12) est formée respectivement dans les voies de guidage (6a, 6b), de préférence en continu, et au moins un collecteur de courant est formé sur le véhicule roulant (7a, 7b, 7c), ledit collecteur de courant venant en prise avec les barres omnibus (12) et alimentant le véhicule roulant (7a, 7b, 7c) en énergie dans les voies de guidage (6a, 6b), l'entrepôt à rayonnages (2) comportant une commande de système (13) qui spécifie une tension dans les barres omnibus (12), **en ce qu'**au moins une partie de ladite au moins une zone d'intersection (8) est dépourvue de barres omnibus (12), **en ce que** le véhicule roulant (7a, 7b, 7c) comporte au moins un capteur d'intersection et une unité de stockage d'énergie, le capteur d'intersection étant conçu de manière à détecter si le véhicule roulant (7a, 7b, 7c) se trouve à l'intérieur de la zone d'intersection (8), et l'unité de stockage d'énergie étant conçue de manière à alimenter temporairement le véhicule roulant (7a, 7b, 7c) en énergie, et **en ce que** la commande de véhicule est reliée au collecteur de courant, au capteur d'intersection, à l'unité d'entraînement ainsi qu'à l'unité de stockage d'énergie et est conçue de telle manière que le véhicule roulant (7a, 7b, 7c) soit soumis aux étapes suivantes :
- basculer dans un mode de fonctionnement normal, mode dans lequel le véhicule roulant (7a, 7b, 7c) fonctionne conformément à l'ordre, lorsqu'une première tension est détectée sur le collecteur de courant,
- basculer dans un mode de sécurité, mode dans lequel la commande de véhicule met l'unité d'entraînement du véhicule roulant (7a, 7b, 7c) hors service, lorsqu'une deuxième tension est détectée sur le collecteur de courant,
- basculer dans un mode de transfert, mode dans lequel le véhicule roulant (7a, 7b, 7c) fonctionne conformément à l'ordre, lorsqu'une troisième tension est détectée au niveau du collecteur de courant et lorsque le capteur d'intersection détecte que le véhicule roulant (7a, 7b, 7c) se trouve à l'intérieur de la zone d'intersection (8), l'unité de stockage d'énergie alimentant le véhicule roulant (7a, 7b, 7c) en énergie pendant le mode de transfert, et
- basculer dans un mode de sécurité lorsque la commande de véhicule met l'unité d'entraînement du véhicule roulant (7a, 7b, 7c) hors service, pour la troisième tension détectée sur le collecteur de courant et pour la détection du capteur d'intersection (8), à savoir que le véhicule roulant (7a, 7b, 7c) se trouve en dehors de la zone d'intersection (8).

2. Entrepôt à rayonnages (1) selon la revendication 1, **caractérisé en ce que** la première et la deuxième tension sont différentes de 0 V et sont respectivement des plages de tension différentes.

3. Entrepôt à rayonnages (1) selon l'une quelconque des revendications 1 ou 2, **caractérisé en ce que** la troisième tension est égale à 0 V ou est formée par une plage de tension qui contient 0 V.

4. Entrepôt à rayonnages (1) selon l'une quelconque des revendications 1 à 3, **caractérisé en ce que** la commande de véhicule est conçue de manière à charger l'unité de stockage d'énergie lorsqu'une première tension et/ou une deuxième tension est (sont) détectée(s) sur le collecteur de courant.

5. Entrepôt à rayonnages (1) selon l'une quelconque des revendications 1 à 4, **caractérisé en ce que** la commande de véhicule est conçue de manière à mettre l'unité d'entraînement du véhicule roulant (7a, 7b, 7c) hors service en mode de sécurité, de telle sorte que la commande de véhicule interrompe complètement le fonctionnement du véhicule roulant (7a, 7b, 7c) dans une voie de guidage (6a, 6b).

6. Entrepôt à rayonnages (1) selon l'une quelconque des revendications 1 à 5, **caractérisé en ce que** la commande de véhicule comporte un compteur qui commence à compter aussitôt que la commande de véhicule passe en mode de transfert, la commande de véhicule étant conçue de manière à basculer le véhicule roulant (7a, 7b, 7c) dans le mode de sécurité si le véhicule roulant (7a, 7b, 7c) ne quitte pas le mode de transfert à l'intérieur d'une limite du compteur.

7. Entrepôt à rayonnages (1) selon l'une quelconque des revendications 1 à 6, **caractérisé en ce que** l'entrepôt à rayonnages (1) comporte au moins un détecteur de franchissement qui est couplé à la commande de système (13), la commande de système (13) étant conçue de manière à spécifier la tension appliquée aux barres omnibus (12) en fonction d'un signal produit par le détecteur de franchissement.

8. Entrepôt à rayonnages (1) selon l'une quelconque des revendications 1 à 7, **caractérisé en ce que** les voies de guidage (6a, 6b) sont droites ou incurvées par endroits en formant une courbe ou une section ascendante/section en pente.

9. Entrepôt à rayonnages (1) selon l'une quelconque des revendications 1 à 8, **caractérisé en ce que** les voies de guidage (6a, 6b) sont reliées de façon individuelle à la commande de système (13) et/ou sont reliées à la commande de système (13) en étant réunies en grappes.

10. Entrepôt à rayonnages (1) selon l'une quelconque des revendications 1 à 9, **caractérisé en ce que** lesdites au moins deux voies de guidage (6a, 6b) convergent l'une par rapport à l'autre à l'intérieur de la zone d'intersection (8) dans un plan (11) qui est en particulier horizontal, et de préférence suivant un angle égal à 90 degrés.

11. Entrepôt à rayonnages selon l'une quelconque des revendications 1 à 10, **caractérisé en ce que** lesdites au moins deux voies de guidage sont agencées en étant inclinées l'une par rapport à l'autre, en particulier suivant un angle égal à 30°, 45° ou 90°.

12. Entrepôt à rayonnages (1) selon l'une quelconque des revendications 1 à 11, **caractérisé en ce que** l'entrepôt à rayonnages (1) comprend une pluralité de voies de guidage (6a, 6b) ainsi qu'une une pluralité de zones d'intersection (8), d'au moins deux à au maximum six voies de guidage (6a, 6b) convergeant à l'intérieur de chaque zone d'intersection (8).

13. Entrepôt à rayonnages (1) selon l'une quelconque des revendications 1 à 12, **caractérisé en ce qu'**au moins une voie de guidage (6a, 6b) s'étend à l'intérieur de l'allée de rayonnages (5a, 5b, 5c).

14. Entrepôt à rayonnages selon l'une quelconque des revendications 1 à 13, **caractérisé en ce qu'**au moins une voie de guidage s'étend à distance des rayonnages.
